# EUROPÄISCHE PATENTANMELDUNG

(11) **EP 0 827 261 A1**
(43) Veröffentlichungstag der Anmeldung: **04.03.1998**
(21) Anmeldenummer: 97114217.9
(22) Anmeldetag: 18.08.1997
(51) Int. Cl.: H02K 11/00

(54) **Pulsrichtergespeiste elektrische Maschine**

(30) Priorität: 28.08.1996 DE 19634824
(71) Anmelder: SIEMENS AKTIENGESELLSCHAFT, 80333 München (DE)
(72) Erfinder: Auinger, Herbert, Dr., 90473 Nürnberg (DE)

(57) **Zusammenfassung**

Zur Verringerung der Spannungsbeanspruchung der Windungsisolierung von pulsrichtergespeisten elektrischen Maschinen wird die Wicklungskapazität der Eingangsspule jeweils erhöht.

## Beschreibung

Die Erfindung bezieht sich auf eine Verringerung der Spannungsbeanspruchung der Windungsisolierung von pulsumrichtergespeisten elektrischen Maschinen.

Die bei Pulsumrichterspeisung prinzipbedingten Schaltvorgänge mit steilen Spannungsflanken verursachen eine erhöhte Beanspruchung der Windungsisolierung der Eingangsspulen (vgl. beispielsweise Zeitschrift ELEKTRIE 49, 1995, Seiten 336-344).

Niederspannungsmotoren in Standardausführung können daher an Pulsumrichtern ungefährdet im allgemeinen nur für Betriebsspannungen bis maximal 400 bis 500 Volt eingesetzt werden.

Fur höhere Bemessungsspannungen sind Zusatzmaßnahmen erforderlich, wie z.B. eine umrichterseitige Filterbeschaltung oder eine Sonderausführung des Motors, mit einem für höhere Spannungen geeigneten Isoliersystem. Beide Maßnahmen sind relativ aufwendig.

Die Aufgabe der vorliegenden Erfindung besteht darin, relativ einfach durchzuführende Maßnahmen anzugeben, mit denen die Wicklungsbeanspruchung, insbesondere der Eingangsspulen, der elektrischen Maschinen herabgesetzt werden kann. Diese Aufgabe wird erfindungsgemäß gelost durch eine gezielte Vergrößerung der wirksamen Wicklungslängskapazität, zumindest im Bereich der Eingangsspulen der Wicklung.

Hierbei wird davon ausgegangen, daß die für die Beanspruchung der Windungsisolierung maßgebliche Spannungsverteilung insbesondere von der wirksamen Wicklungslängskapazität bestimmt wird. D.h. also, eine Vergrößerung dieser Längskapazität führt zu einer günstigeren Spannungsverteilung.

Hierzu werden sinnvollerweise die Eingangsspulen der Wicklung der elektrischen Maschine mit einem Kondensator oder einem RC-Glied beschaltet. Damit läßt sich eine günstigere Spannungsverteilung mit geringerer Spannungsbeanspruchung erwarten. Die bei Pulsumrichterbetrieb klemmenseitig auftretenden Potentialsprünge werden dann gewissermaßen über die Eingangsspule hinweg durchgekoppelt, wodurch sich der die Windungsisolierung beanspruchende transiente Spannungsabfall an den Eingangsspulen entsprechend verringert. Die genannte Maßnahme kann natürlich auch an weiteren Spulen vorgenommen werden.

Die erforderliche zusätzliche Kapazität ist relativ klein. Sie liegt, wie die Längskapazität der Wicklung der Spule, in der Größenordnung 10⁻⁹ bis 10⁻¹⁰F. Der Aufwand ist damit relativ gering. Die Kondensatoren können entweder im Wickelkopf einbandagiert und mittelbar parallel zu den Eingangsspulen angelötet oder im Klemmenkasten des Motors untergebracht werden.

Bei parallelen Wicklungszweigen können entweder in jedem Parallelzweig Einzelkondensatoren oder RC-Glieder angeschlossen sein oder auch eine gemeinsame Summenkapazität mit galvanischer Parallelverbindung der Eingangsspulen vorgesehen werden.

Anhand eines in der Zeichnung dargestellten Ausführungsbeispiels sei die Erfindung näher erläutert:

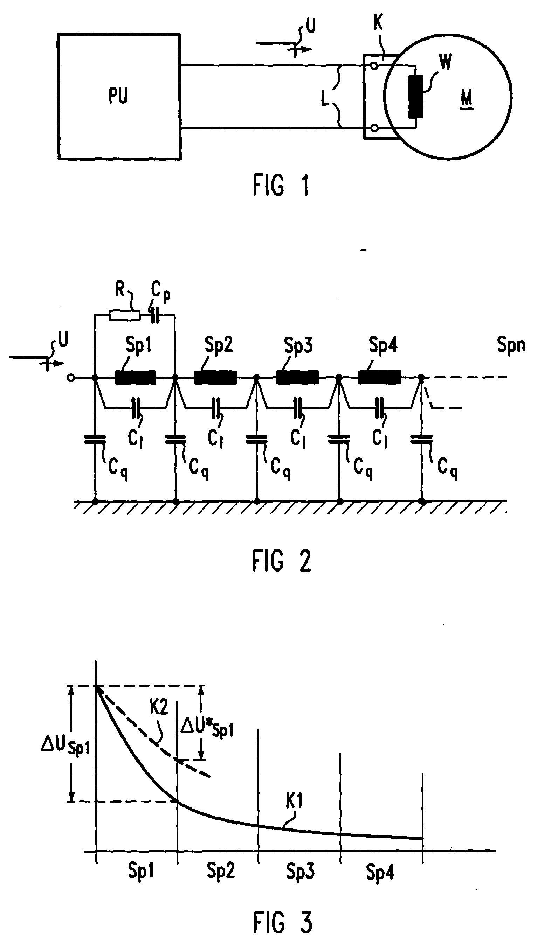

Wie aus FIG 1 ersichtlich, speist ein Pulsumrichter PU über ein Kabel L eine Drehstrommaschine M mit den Wicklungen W. Durch die, bei der Pulsumrichterspeisung prinzipbedingten Schaltvorgänge mit steilen Spannungsflanken, verursachen die in die Wicklungen W der Drehstrommaschine M einlaufenden Spannungswellen U eine erhöhte Beanspruchung der Windungsisolierung, insbesondere in den Eingangsspulen.

FIG 2 zeigt schematisch im Ersatzschaltbild die einzelnen Spulen Sp1 bis Spn einer Wicklung, wobei die einzelnen Spulen jeweils Längskapazitäten C₁ und Querkapazitäten C_{q} gegen Masse aufweisen.

Wie aus FIG 3 ersichtlich, wird insbesondere die Eingangsspule Sp1 erhöht beansprucht, und zwar ergibt sich an dieser Spule Sp1 der in FIG 3 dargestellte transiente Spannungsabfall ΔU_{Sp1} gemäß der Kurve K1, die die Spannungsverteilung über die einzelnen Spulen Sp1 bis Sp4 hinweg zeigt.

Zur Verringerung des Spannungsabfalls ΔU_{SP1} auf einen Wert ΔU*_{SP1} an der Eingangsspule Sp1 gemäß Kurve K2 wird die durch die Windungsspule gebildete - im Ersatzschaltbild mit C₁ bezeichnet - Längskapazität C₁ der Spule Sp1 künstlich gezielt erhöht, und zwar geschieht dies durch die Parallelschaltung eines Kondensators Cₚ zur Spule Sp1. Dieser Kondensator Cₚ kann gegebenenfalls noch durch die Reihenschaltung eines Widerstandes R ergänzt sein. Die Kapazität des zusätzlichen Kondensators Cₚ liegt dabei in der Größenordnung der Wicklungslängskapazität C₁.

Die zusätzlichen Kondensatoren Cₚ können z.B. an den Stirnseiten im Kopf der Wicklungen W der elektrischen Maschine M einbandagiert werden oder im Klemmenkasten K dieser Maschine M angeordnet sein.

## Patentansprüche

1. Elektrische Maschine, bei der durch eine gezielte Vergrößerung der Wicklungslängskapazität zumindest im Bereich der Eingangsspulen (Sp1) der Wicklung die Spannungsbeanspruchung der Windungsisolierung bei Pulsumrichterspeisung verringert ist.

2. Elektrische Maschine nach Anspruch 1, **gekennzeichnet durch** den Eingangsspulen (Sp1) parallel geschaltete Kondensatoren (Cₚ), deren Kapazität etwa in der Größenordnung der Längskapazität C₁ der Eingangsspulen (Sp1) liegt.

3. Elektrische Maschine nach Anspruch 1, **gekennzeichnet durch** im Wicklungskopf der Maschine (M) angeordnete Kondensatoren (Cp).

4. Elektrische Maschine nach Anspruch 1 mit im Klemmkasten (K) der Maschine (M) angeordneten Kondensatoren (Cp).

5. Elektrische Maschine nach Anspruch 1 **gekennzeichnet durch** die Beschaltung der Eingangsspulen (Sp1) mit RC-Gliedern.
